# NEUE EUROPÄISCHE PATENTSCHRIFT

(11) **EP 0 541 904 B2**
(45) Veröffentlichungstag und Bekanntmachung des Hinweises auf die Entscheidung über den Einspruch: **25.09.2002**
(45) Hinweis auf die Patenterteilung: 28.01.1998
(21) Anmeldenummer: 92112045.7
(22) Anmeldetag: 15.07.1992
(51) Int. Cl.: B23K 37/04, B25H 1/10

(54) **Tisch, insbesondere Zuricht-und Schweisstisch**
Table used for welding and preparation
Table, en particulier pour la préparation et le soudage

(30) Priorität: 15.11.1991 DE 9114218 U; 15.11.1991 DE 9114219 U; 15.11.1991 DE 9114220 U
(43) Veröffentlichungstag der Anmeldung: 19.05.1993
(60) Teilanmeldung: 94120640.1
(73) Patentinhaber: Ludwig Demmler GmbH & Co., 87751 Heimertingen (DE)
(72) Erfinder: Demmeler, Ludwig, W-8941 Boos (DE); Demmeler, Johannes, W-8941 Boos (DE)
(74) Vertreter: Hutzelmann, Gerhard

(56) Entgegenhaltungen:
- EP-A- 0 068 258
- DE-U- 9 015 218
- DE-U- 9 109 540
- GB-A- 271 693
- US-A- 4 867 427
- WELDING JOURNAL Bd. 67, Nr. 1, Januar 1988, MIAMI, FL, USA Seite 102 'platenize your plant with acorn platens
- Taschenbuch für den Maschinenbau, Dubbel, 14. Auflage, 1981, Seiten 369,370

## Beschreibung

Die Erfindung bezieht sich auf einen Zuricht- und Schweißtisch, mit einer Tischplatte sowie an den Kanten der Tischplatte seitlich angeordneten, nach unten stehenden Wangen, wobei die Tischplatte sowie die seitlichen Wangen mit über die ganze Oberfläche verteilten, unmittelbar in der Tischplatte sowie in den Wangen angeordneten und unmittelbar zur Aufnahme von Spannelementen dienenden, zylindrischen Durchgangsbohrungen versehen sind, die in einem gleichmäßigen Rastermaß angeordnet sind.

Aus EP-A-0 266 172 ist ein derartiger Tisch bekannt geworden, der in seiner Tischplatte sowie einer nach unten stehenden Seitenwange zylindrische Durchgangsbohrungen aufweist, die dort in Abständen angeordnet sind und zur Aufnahme von schraubstockähnlichen Spannwerkzeugen dienen. Diese sind dazu an ihrer dem Tisch zugewandten Unterseite mit Zapfen versehen, welche in die Durchgangsbohrungen eingesteckt werden und dadurch die Spannwerkzeuge gegen ein seitliches Verrutschen sichern.

Die DE-U-91 09 540 zeigt und beschreibt eine Meßplatte, mit sogenannten Normbohrungen und Gewindebohrungen über die Positionierelementeträger mittels Steckschraubverbinder an der Meßplatte befestigt werden können.

Aus der US-A4,867,427 ist eine Einrichtung mit einer Platte mit quadratischen Durchgangsöffnungen bekannt. In diese Durchgangsöffnungen können am unteren Ende der Längsstrebe einer Schraubzwinge angeformte im wesentliche zylindrische und mit einem Ansatz versehene Zapfen eingesteckt werden.

Aus der DE-U-90 15 218 ist darüber hinaus ein Werktisch bekannt, der eine Konstruktion mit Aufnahmehülsen aufweist, in welche sogenannte Niederhalter einsteckbar sind.

Der Erfindung liegt - hiervon ausgehend - die Aufgabe zugrunde, einen Tisch der genannten Art so auszugestalten, daß damit Geräte, Gestelle und dergleichen auf einfache und rationelle Weise aus ihren Einzelteilen exakt aufgebaut und dann durch Schweißpunkte fixiert werden können.

Diese Aufgabe wird erfindungsgemäß durch die kennzeichnenden Merkmale des Anspruchs 1 gelöst.

Mit den Befestigungsmitteln und mit Hilfe der Bolzen und Schraubzwingen können die einzelnen Bauteile exakt festgelegt werden.

Durch die seitlichen Wangen und ihre Durchgangsbohrungen ist eine weitere Festlegungsmöglichkeit der aufzubauenden Geräte und Gestelle gegeben.

Die winkelförmig ausgebildeten Stützen ermöglichen dabei einen räumlichen Aufbau der Bauteile.

Eine weitere vorteilhafte Ausgestaltung ist dadurch gegeben, daß auf der Tischplatte und/oder an den seitlichen Wangen C-förmig ausgebildete, mit drei Schenkeln versehene Stützen lösbar befestigt sind, die mit ihrem einen Schenkel am Tisch anliegen.

Der mittlere Schenkel steht dann senkrecht nach oben, während der dritte Schenkel parallel zur Tischplatte bzw. der seitlichen Wange und im Abstand von dieser vefläuft. Damit ist dann eine weitere parallele Fläche geschaffen, was für die Fixierung komplizierter Gestelle sehr vorteilhaft sein kann.

Weiterhin sehr vorteilhaft ist es, wenn erfindungsgemäß mehrere Stützen hintereinanderliegend lösbar miteinander verbunden sind und wenigstens eine mit einem ihrer Schenkel am Tisch anliegt und mit diesem über eine Bohrung verbunden ist.

Durch diese hintereinanderliegende Anordnung können sehr komplizierte räumliche Anordnungen aufgebaut werden, die am Ende oder auch in einem mittleren Bereich zur Fixierung der aufbauenden Teile herangezogen werden kann.

Als sehr vorteilhaft hat es sich auch erwiesen, wenn gemäß der Erfindung die Tischplatte mit auswechselbaren Beinen versehen ist, die in ihrer Länge wenigstens innerhalb kleinerer Grenzen durch einstellbare Füße variierbar sind.

Durch die Auswechselbarkeit der Beine läßt sich der Tisch in unterschiedliche Höhenlagen bringen, was für unterschiedlich große aufzubauende Gestelle oder dergleichen sehr vorteilhaft sein kann. Mit den verstellbaren Füßen läßt sich der Tisch exakt in eine horizontale Ausrichtung bringen und darüber hinaus können Bodenuneberheiten leicht ausgeglichen werden.

In der Zeichnung ist die Erfindung anhand mehrerer Ausführungsbeispiele veranschaulicht. Dabei zeigen:
- Fig.1: eine schaubildliche Darstellung eines Tisches mit einer Vielzahl zylindrischer Duchgangsbohrungen sowohl in der Tischplatte als auch in den seitlichen Wangen,
- Fig.2: eine Ansicht einer winkelförmigen Stütze, die über einen Bolzen am Tisch befestigt ist,
- Fig.3: eine Ansicht einer C-förmigen Stütze, die mit einem ihrer kürzeren Schenkel auf der Tischplatte aufliegt,
- Fig.4: mehrere hintereinander angeordnete winkelförmige Stützen, die an der Tischplatte befestigt sind,
- Fig.5: ein Schaubild einer Schraubzwinge mit einer rohrförmigen Längsstrebe und einer Querstrebe die aus einem rechteckförmigen Stützrohr und einer im Querschnitt an dieses angepaßten Strebe besteht,
- Fig.6: eine Teilansicht der Querstrebe im aufgebrochenen Zustand,
- Fig.7: eine Ansicht einer weiteren Schraubzwinge, die mit ihrer Längsstrebe in einer Durchgangsbohrung des Tisches sitzt und deren Querstrebe verschiebbar auf der Längsstrebe angeordnet ist,
- Fig.8: eine schaubildliche Darstellung eines Bolzens, mit einem gerändelten Handgriff und drei Kugeln als Verhakungsmittel,
- Fig.9: den in zwei plattenförmige Bauteile eingesetzten Bolzen,

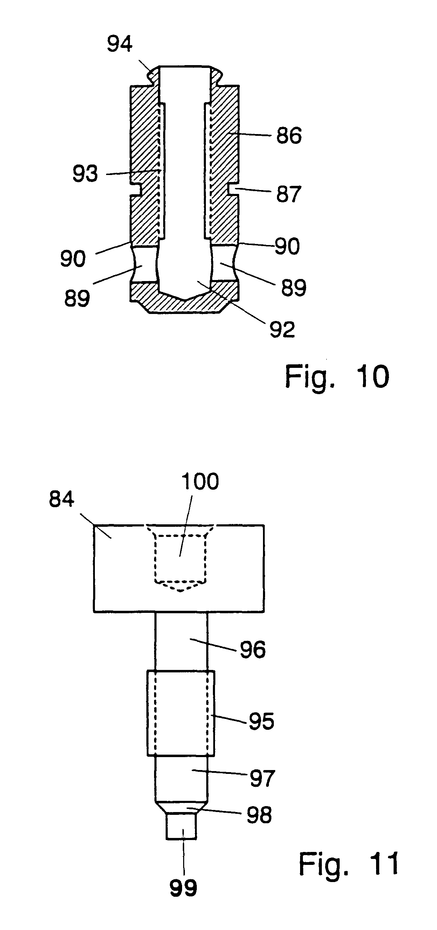

- Fig.10: einen Längsschnitt durch das Gehäuse des Bolzens und
- Fig.11: eine Ansicht der Innenspindel des Bolzens.

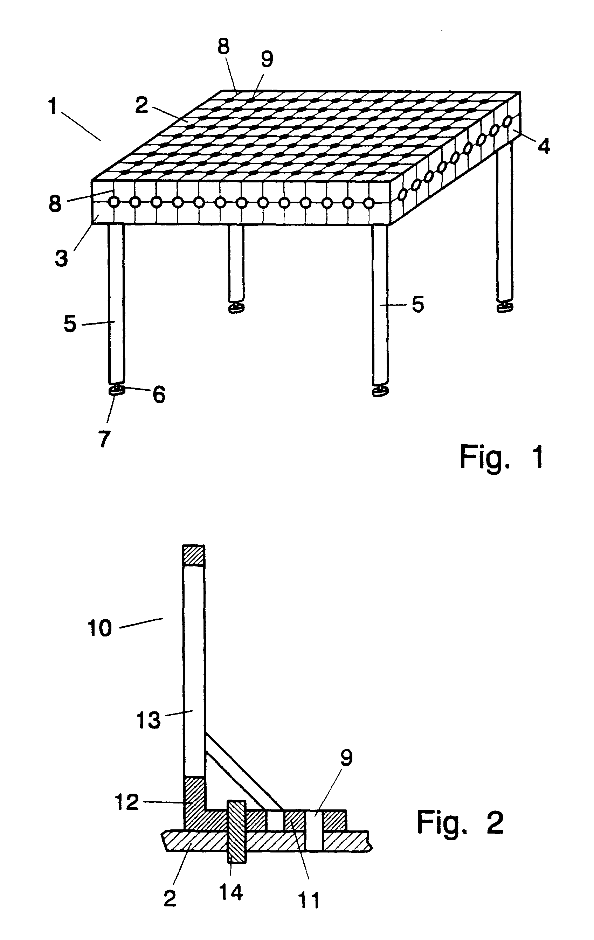

Mit 1 ist in Fig.1 ein Tisch bezeichnet, der eine Tischplatte 2 und daran angeordnete, senkrecht nach unten stehende seitliche Wangen 3 und 4 aufweist.

An der Unterseite der Tischplatte 2 sind vier Beine 5 angeschraubt, welche an ihrem unteren Ende mit über Gewindspindein 6 höhenverstellbaren Füßen 7 versehen sind.

Durch Auswechseln der Beine und Einstellen der Füße ist eine große Anpassungsfähigkeit des Tisches an unterschiedlichste Anforderungen gegeben.

Die Tischplatte 2 ist mit einem Rasterliniennetz versehen, dessen Rasterlinien 8 von der jeweiligen Außenkante und untereinander einen gleichbleibenden Abstand von 10 cm aufweisen. An den Kreuzungspunkten dieser Rasterlinien 8 ist jeweils eine Durchgangsbohrung 9 vorgesehen, welche im rechten Winkel zur Tischplattenoberfläche verläuft. Diese Rasterlinien 8 gehen auch über die Kanten der Tischplatte 2 in die seitlichen Wangen 3 und 4 über, wo ebenfalls Durchgangsbohrungen 9 vorgesehen sind. An den Rasterlinien 8 können Markierungen in Form von fortlaufenden Zahlen oder Maßangaben angebracht sein.

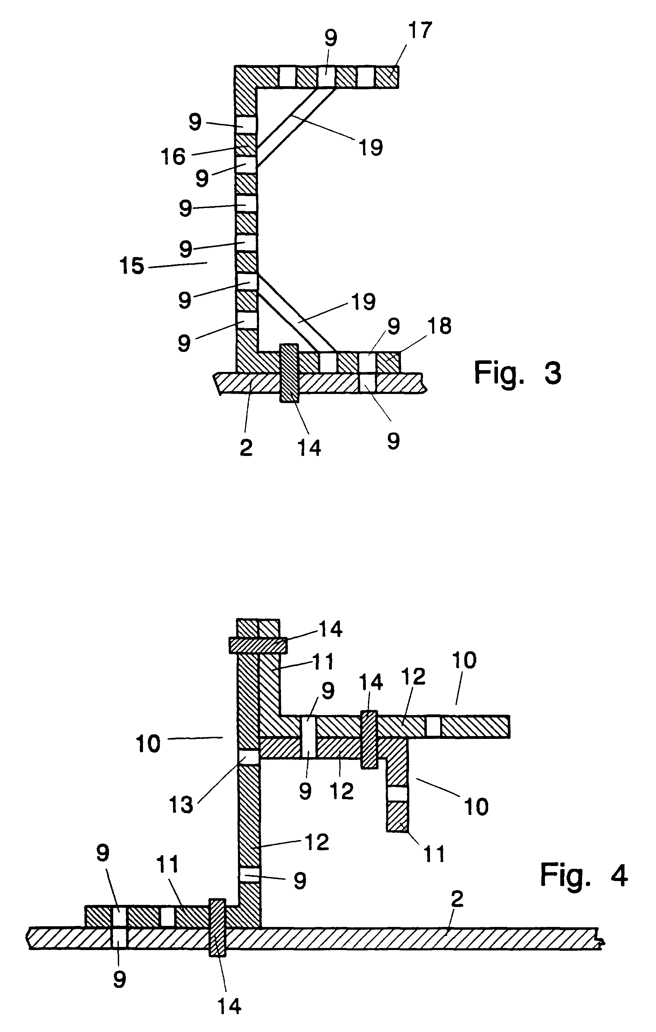

In Fig. 2 ist auf die Tischplatte 2 eine winkelförmige Stütze 10 aufgesetzt, welche zwei im rechten Winkel zueinander angeordnete Schenkel 11 und 12 aufweist. Im einen Schenkel 11 sind ebenfalls Durchgangsbohrungen 9 vorgesehen, die mit gegenüber denen der Tischplatte halber Teilung angeordnet sind, d.h. einen gegenseitigen Abstand von 5 cm aufweisen. Im anderen Schenkel 12 ist dagegen eine langlochförmige Durchbrechung 13 vorgesehen, deren Breite dem Durchmesser der Durchgangsbohrungen 9 entspricht. Mit dem Schenkel 11 liegt die winkelförmige Stütze 10 auf der Tischplatte auf und ist mit dieser durch einen nicht näher dargestellten Bolzen 14 verbunden.

An einer so angeordneten Stütze können nun Bauteile zum Aufbauen auch komplizierter Schweißkonstruktionen sicher und maßhaltig befestigt werden.

Beim Ausführungsbeispiel nach Fig.3 sitzt auf der Tischplatte 2 eine C-förmig ausgebildete Stütze 15, die in allen drei Schenkeln 16, 17 und 18 mit Durchgangsbohrungen 9 versehen ist. Die einzelnen zueinander benachbarten Schenkel sind mit Schrägstreben 19 verbunden, wodurch insbesondere bei größeren Stützen eine große Steifigkeit gewährleistet ist.

Mit einer solchen Stütze kann auch eine Festlegung von Bauteilen von oben her erfolgen, so daß auch bei verhältnismäßig großer Höhe eine sichere Festlegung in allen drei Richtungen erfolgen kann.

In Fig.4 ist gezeigt, wie mehrere winkelförmige Stützen 10 hintereinander angeordnet und jeweils mit Bolzen 14 miteinander verbunden sind. Dabei können die unterschiedlichsten Stützengrößen und Ausgestaltungen vorgesehen werden, um auch komplizierte Aufbauten zu ermöglichen.

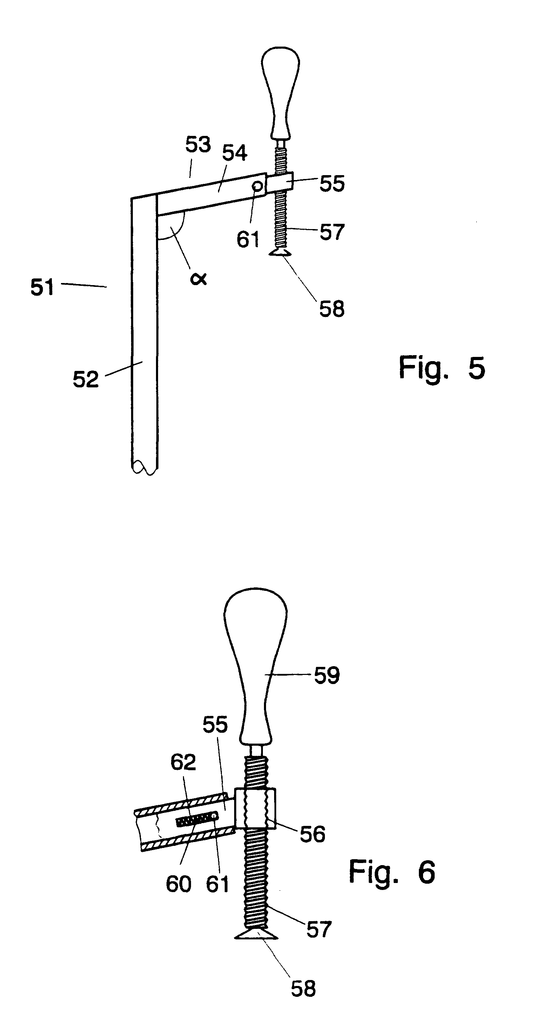

Mit 51 ist in Fig.5 eine Schraubzwinge bezeichnet, die mit einer Längsstrebe 52 ausgerüstet ist, welche von einem mit kreisförmigem Querschnitt versehenen Rohr gebildet wird. Am einen Ende dieser Längsstrebe 52 ist eine Querstrebe 53 angeordnet, die aus einem im Querschnitt rechteckigen Stützrohr 54 und einer darin längsverschiebbar gelagerten Strebe 55 besteht, wobei diese Strebe 55 in ihrem Querschnitt an die Innenabmessungen des Stützrohres 54 angepaßt ist.Die Querstrebe 53 bzw. das Stützrohr 54 schließt mit der Längsstrebe 52 einen Winkel α von 100 bis 102° ein.

Am von der Längsstrebe abgewandten Ende der Strebe 55 ist eine parallel zur Längsstrebe 52 verlaufende Gewindebohrung 56 angeordnet, in welche eine Schraubenspindel 57 eingeschraubt ist. Diese Schraubenspindel 57 trägt an ihrem unteren Ende eine drehbar gelagerte kreisförmige Platte 58 und am oberen Ende einen Drehgriff 59. In ihrem im Stützrohr 54 steckenden Abschnitt weist die Strebe 55 eine in ihrer Längsrichtung verlaufende langlochförmige Ausnehmung 60 auf, in welche ein Stift 61 eingreift, der im Stützrohr 54 gelagert ist und die Längsbewegungen der Strebe begrenzt. An diesem Stift 61 einerseits und dem inneren Ende der langlochförmigen Ausnehmung 60 andererseits greift eine Druckfeder 62 an, die als Rückholfeder für die Strebe dient und diese in ihre eingefahrene Position drückt.

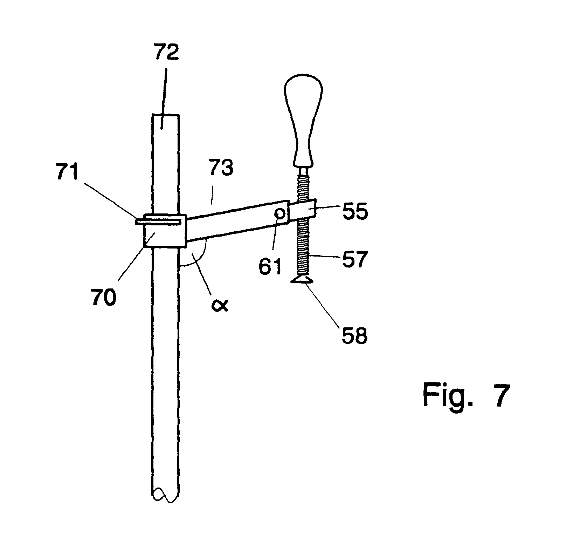

Beim Ausführungsbeispiel nach Fig.7 ist an der Querstrebe 73 ein Lager 70 vorgesehen, mit welchem diese längsverschiebbar auf der Längsstrebe 72 gelagert ist. Zum Festlegen dieser beiden Streben ist am Lager 70 der Querstrebe 73 eine Klemmeinrichtung 71 angeordnet.

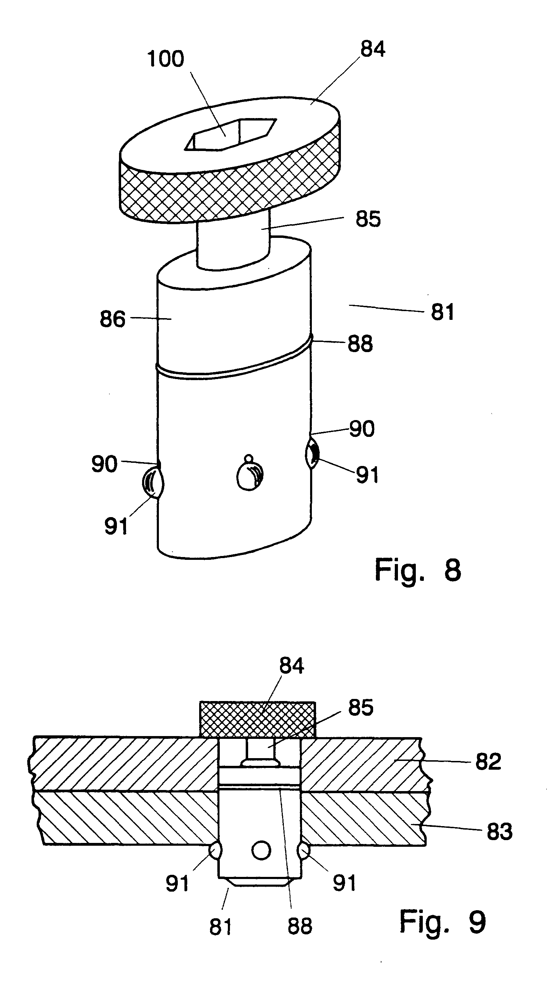

Mit 81 ist in Fig.8 ein Bolzen bezeichnet, der zum Fixieren von zwei mit Durchgangsöffnungen versehenen Bauteilen 82,83 dient, wie dies in Fig.9 dargestellt ist, wobei das Teil 83 beispielsweise der Tisch 2 sein kann. Die Durchgangsöffnungen dieser beiden Bauteile 82,83 sind entweder als zylindrische Durchgangsbohrungen oder als langlochförmige Durchbrechungen mit parallelen Wänden ausgebildet, in welche der Bolzen 81 mit nur geringem Spiel paßt. An seiner oberen Seite weist der Bolzen 81 einen Handgriff 84 auf, der drehfest mit einer Spindel 85 verbunden ist, die in das Gehäuse 86 des Bolzens 81 hineinragt. Das Gehäuse ist mit einer Umfangsnut 87 versehen, in welche ein Gummiring 88 eingesetzt ist. Im unteren Endbereich des Gehäuses 86 sind vier radiale Bohrungen 89 vorgesehen, die von außen her nachträglich mit einer Anstauchung 90 versehen sind und in welche von innen her Kugeln 91 eingesetzt sind. Aufgrund der durch die Anstauchung eingetretenen Querschnittsverjüngung an der Außenseite der Bohrungen 89 können die Kugeln dort nicht völlig austreten und sind so gesichert. Das Bolzen-Gehäuse 86 ist innen mit einem Sackloch 92 versehen, dessen oberhalb der radialen Bohrungen 89 liegender Abschnitt mit einem Innengewinde 93 ausgestattet ist. Das obere Ende des Bolzen-Gehäuses 86 ist mit einem ringförmigen Ansatz 94 versehen, der nach innen einbördelbar ist, wobei dieses Einbördeln nach dem Zusammenbau des Bolzens erfolgt.

Der Handgriff 84 ist mit einer Gewindespindel 95 drehfest verbunden, welche in das Innengewinde 93 des Bolzengehäuses 86 einschraubbar ist. Zwischen dem Handgriff 84 und der Gewindespindel 95 ist ein Spindelabschnitt 96 mit etwas geringerem Durchmesser vorgesehen, gegen den der Ansatz 94 gebördelt wird um den Bolzen nach oben abzudichten. Unterhalb der Gewindespindel 95 ist ein zylinderförmiger Teil 97 mit einem konischen Abschnitt 98 an seinem unteren Ende. Den unteren Abschluß dieses Spindelteils bildet ein Zapfen 99, der unmittelbar an den konischen Abschnitt anschließt.

In der am weitesten herausgedrehten Stellung des Spindelteils liegen die Kugeln 91 an dem Zapfen 99 an und werden beim Hereindrehen der Gewindespindel von dem konischen Abschnitt 98 nach außen gedrückt und dann vom zylinderförmigen Teil 97 in dieser Außenposition gehalten. Die Kugeln legen sich dabei an eine möglichst angefaste Kante einer Durchgangsbohrung des Bauteiles 83 an, wobei der Gummiring ein Mitdrehen des Bolzens verhindert. Sobald sich auch der Handgriff 84 an das andere Bauteil 82 anlegt, werden die Kugeln in die Anlagefläche hinein abgerollt. Sie drehen dabei auf der Innenseite auf dem zylindrischen Abschnitt 97 und auf der Außenseite auf der Anlagefläche, so daß sich eine Abrollung entsprechend einem Planetengetriebe ergibt.

Um das Anziehen des Bolzens mit noch mehr Kraft ausüben zu können, ist im Handgriff 84 noch zusätzlich ein Sechskantloch 100 zur Aufnahme eines Sechskantschlüssels vorgesehen.

## Patentansprüche

1. Zuricht- und Schweißtisch(l), mit einer Tischplatte(2) sowie an den Kanten der Tischplatte seitlich angeordneten, nach unten stehenden Wangen(3,4), wobei die Tischplatte(2) sowie die seitlichen Wangen(3,4) mit über die ganze Oberfläche verteilten, unmittelbar in der Tischplatte(2) sowie in den Wangen(3,4) angeordnete und unmittelbar zur Aufnahme von Spannelementen dienenden, zylindrischen Durchgangsbohrungen(9) versehen sind, die in einem gleichmäßigen Rastermaß angeordnet sind, **dadurch gekennzeichnet, daß** als Spannelemente sowohl Spannbolzen(14,81), die sich an der Unterseite der Tischplatte abstützen, als auch das Standrohr(52,72) einer Schraubzwinge(51) durch die Durchgangsbohrungen(9) hindurchgreifen, und **daß** auf der Tischplatte(2) und/oder an den seitlichen Wangen(3,4) im wesentlichen winkelförmig ausgebildete, als Befestigungsmittel dienende Stützen(10) mit wenigstens zwei im rechten Winkel zueinander verlaufenden Schenkeln(11,12) lösbar befestigt sind, wobei in den Schenkeln(11,12) ebenfalls zylindrische Bohrungen(9) und/oder langlochförmige Durchbrechungen(13) gleicher Breite vorgesehen sind.

2. Zuricht- und Schweißtisch nach Anspruch 1, **dadurch gekennzeichnet, daß** auf der Tischplatte(2) und/oder an den seitlichen Wangen(3,4) C-förmig ausgebildete, mit drei Schenkeln(16,17,18) versehene Stützen(15) lösbar befestigt sind, die mit ihrem einen Schenkel am Tisch(1) anliegen.

3. Zuricht- und Schweißtisch nach Anspruch 1 oder 2, **dadurch gekennzeichnet, daß** mehrere Stützen(10,15) hintereinanderliegend lösbar miteinander verbunden sind und wenigstens eine mit einem ihrer Schenkel am Tisch(1) anliegt und mit diesem über eine Bohrung(9) verbunden ist.

4. Zuricht- und Schweißtisch nach einem der vorhergehenden Ansprüche, **dadurch gekennzeichnet, daß** die Tischplatte(2) mit auswechselbaren Beinen(5) versehen ist, die in ihrer Länge wenigstens innerhalb kleinerer Grenzen durch einstellbare Füße(6,7) variierbar sind.

## Claims

1. Assembly and welding table(1), with a table-top (2) and walls (3,4) that project downwards are provided on the sides of the table-top of the table, the table-top (2) and the walls (3,4) are provided with cylindrical holes (9) positioned a uniform distance apart that are distributed across the whole of the table-top of the table, are located directly in the table-top of the table as well as in its side walls and serve directly to accommodate clamping elements, **wherein** as clamping elements as well bolts (14, 81) that brace themselves against the underside of the table-top of the table as the longitudinal beam (52, 72) of a screw clamp (51) go through the holes (9), **wherein** essentially angular supports (10) that act as attachment elements and have at least two sides (11, 12) located at right angles to each other are attached to the table-top (2) of the table and / or the side walls (3, 4) to permit subsequent detachment, while cylindrical holes (9) and / or oblong openings (13) of the same width are provided in the sides as well.

2. Table according to claim 1, **wherein** C-shaped supports (15) with three sides (16, 17, 18) are attached to the table-top (2) of the table and / or to the side walls (3, 4) to permit subsequent detachment, one of the sides of these supports resting on the table (1).

3. Table according to claim 1 or 2, **wherein** a number of supports (10, 15) are connected behind each other to permit subsequent detachment, at least one side of one of which is resting on the table (1) and is attached to the same via a hole (9).

4. Table according to one of the previous claims, **wherein** the table-top (2) of the table is provided with legs (5) that can be changed, the length of which can be varied at least within a small range by providing adjustable feet (6, 7).

## Revendications

1. Table d'ébauchage et de soudage (1) avec un plateau de table (2), ainsi que des parois (3, 4) disposées latéralement aux bords du plateau de table et saillantes vers le bas, le plateau de table (2), ainsi que les parois latérales (3, 4) sont munis de trous de passage cylindriques (9) répartis sur toute la surface, prévus directement dans le plateau de table (2) et dans les parois (3, 4) servant directement pour la réception d'éléments de serrage et disposés selon une distance modulaire régulière **caractérisé en ce que** comme éléments de serrage, aussi bien des boulons de serrage (14, 81) qui prennent appui sur la face inférieure du plateau de table, qu'également le tube vertical (52, 72) d'un serre-joint (51) traversent les trous de passage (9) et que sur le plateau de table (2) et/ou sur les parois latérales (3, 4) sont fixés de manière amovible, en tant que moyens de fixation, des supports (10) de forme principalement angulaire, avec au moins deux côtés (11, 12) formant un angle droit l'un par rapport à l'autre, des trous (9) également cylindriques et/ou des percées (13) de forme oblongue de même largeur étant prévus dans les côtés (11, 12).

2. Table d'ébauchage et de soudage selon la revendication 1, **caractérisée en ce que**, sur le plateau de la table (2) et/ou sur les parois latérales (3, 4), des supports (15) en forme de C, munis de trois côtés (16, 17, 18) sont fixés de façon amovible et sont adjacents à la table (1) avec l'un de leurs côtés.

3. Table d'ébauchage et de soudage selon la revendication 1 ou 2, **caractérisée en ce que** plusieurs supports (10, 15) sont raccordés entre eux les uns derrière les autres de façon amovible et qu'au moins un de ces supports est adjacent à la table (1) avec l'un de ses côtés et qu'il est relié à celle-ci par un trou (9).

4. Table d'ébauchage et de soudage selon l'une des revendications précédentes, **caractérisée en ce que** le plateau de la table (2) est muni de piétements (5) échangeables dont la longueur est variable au moins dans des petites limites grâce à des pieds réglables (6, 7).
